(19) Europäisches Patentamt

European Patent Office

Office européen des brevets

(11) **EP 1 382 036 B1**

(12) **EUROPEAN PATENT SPECIFICATION**

(45) Date of publication and mention
of the grant of the patent:
**15.09.2004 Bulletin 2004/38**

(21) Application number: **02714574.7**

(22) Date of filing: **11.04.2002**

(51) Int Cl.$^7$: **G11B 7/00**

(86) International application number:
**PCT/JP2002/003629**

(87) International publication number:
**WO 2002/089119 (07.11.2002 Gazette 2002/45)**

(54) **INFORMATION REPRODUCING APPARATUS AND OPTICAL RECORDING MEDIUM**

DATEN-WIEDERGABE-GERÄT UND OPTISCHES SPEICHERMEDIUM

APPAREIL DE REPRODUCTION D'INFORMATIONS ET SUPPORT D'ENREGISTREMENT OPTIQUE

(84) Designated Contracting States:
**DE FR GB**

(30) Priority: **25.04.2001 JP 2001128477**

(43) Date of publication of application:
**21.01.2004 Bulletin 2004/04**

(73) Proprietor: **Pioneer Corporation
Tokyo 153-8654 (JP)**

(72) Inventors:
- **YANAGISAWA, Takuma,
c/c Pioneer Corporation
Tsurugashima-shi, Saitama 350-2201 (JP)**
- **MAEDA, Takanori, c/c Pioneer Corporation
Tsurugashima-shi, Saitama 350-2201 (JP)**
- **NOMOTO, Takayuki, c/c Pioneer Corporation
Tsurugashima-shi, Saitama 350-2201 (JP)**
- **OHKUBO, Akinori, c/c Pioneer Corporation
Tsurugashima-shi, Saitama 350-2201 (JP)**

(74) Representative: **Pfau, Anton Konrad, Dr.
Grünecker, Kinkeldey,
Stockmair & Schwannhäusser
Anwaltssozietät
Maximilianstrasse 58
80538 München (DE)**

(56) References cited:
**EP-A- 0 953 974**          **WO-A-00/39792**

- **PATENT ABSTRACTS OF JAPAN vol. 2000, no. 06, 22 September 2000 (2000-09-22) -& JP 2000 082221 A (MATSUSHITA ELECTRIC IND CO LTD), 21 March 2000 (2000-03-21)**
- **PATENT ABSTRACTS OF JAPAN vol. 2000, no. 09, 13 October 2000 (2000-10-13) -& JP 2000 182254 A (PIONEER ELECTRONIC CORP), 30 June 2000 (2000-06-30) & US 6 353 582 A ((KIKUCHI IKUYA)) 5 March 2002 (2002-03-05)**

# Description

Technical Field

The present invention relates to an information reproducing apparatus for reading pieces of information from an optical recording medium, and in particular, to an information reproducing apparatus having the capability of steadily detecting spherical aberration and an optical recording medium applicable to such an information reproducing apparatus.

Background Art

In an optical pickup equipped with a focus servomechanism, device for increasing a recording density of each optical recording medium has been incorporated. Such a mechanism requires that the diameter of a light spot collected by an objective lens be reduced. Thus, the reduction in the diameter is realized by enlarging the numerical aperture of the objective lens and/or shortening the wavelength of an optical source.

Examples of increased values of recording density can be seen in DVDs (Digital Versatile Discs), serving as optical recording mediums. For the DVD, the numerical aperture of an objective lens is set to 0.6 and the wavelength of an optical source is 650 nm. These figures show a higher recording density than for a CD (Compact Disc) that has an objective lens having a numerical aperture of 0.45 and an optical source having a wavelength of 780 nm. The next-generation optical disc, which will be developed in the future, will accelerate not only an increase in the numerical aperture of an objective lens but also a decrease in the wavelength of an optical source. Thus, it can be supposed that both the recording density and the recording capacity will be raised more in the future.

Increasing the numeral aperture of an objective lens and/or shortening the wavelength of an optical source will cause optical spherical aberration to be larger. This enlarges a collected light spot, thus making it difficult to perform high-quality recording and reproduce operations. Deterioration in the spherical aberration is attributable to various reasons resulting from using a variety of types of lens and errors in thickness in producing a transparent substrate of an optical recording medium.

Conventionally, to detect such spherical aberration, a lens, called expander lens, is incorporated in the optical pickup, and the lens is positionally moved in a controlled manner. Changes in a detected signal generated responsively to the movement are used to detect the spherical aberration, and the spherical aberration is compensated.

Another technique is provided by an optical pickup disclosed in Japanese Patent Laid-open publication No. 2000-182254. In this optical pickup, an optical system is disposed in the optical pickup so as to detect a difference between focus positions at an inner circumferential part and an outer circumferential part of a spot. A spherical-aberration error signal obtained from the optical system is used to find the spherical aberration, which is then compensated.

However, in the case of the foregoing conventional detecting technique of the spherical aberration, the expander lens should be moved in position for the detection. Because the expander lens is slow to move, there arises a problem that the spherical aberration cannot be detected rapidly.

In addition, although the conventionally used optical pickup is capable of detecting the spherical aberration with precision, it is required that two optical systems for detecting the focus error be incorporated into the pickup. This leads to fairly complicated light paths within the optical pickup, so that there arises another problem that efficiency in use of the light is lowered.

WO 00/39792 discloses a spherical aberration detection and correction device in which said spherical aberration signal detection is made by two detection systems located in the reflected light beam, one before and the other behind the focus point of the reflected light beam. Such a device necessitates additional detection systems which can be avoided in the present invention.

Disclosure of the Invention

It is therefore an object of the present invention to provide not only an information reproducing apparatus of quickly detecting the spherical aberration without both of a particular optical system and the movement of the expander lens but also an optical recording medium applicable to the information reproducing apparatus.

The above object of the present invention can be achieved by an information reproducing apparatus provided with: a focusing device which makes a signal-reading probe light converge onto an optical recording medium; a focus servo device which maintains a focus on a recording layer of the optical recording medium by controlling the focusing device; a focus offset providing device which provides a predetermined offset to a target value used by the focus servo device; and a spherical aberration detecting device which detects a signal indicative of spherical aberration contained in the probe light on the basis of an intensity of a signal reproduced based on a plurality of target values obtained by the offset providing device generated on at least one signal of at least one predetermined spatial frequency recorded on the optical recording medium.

According to the present invention, without using a particular optical system and without moving the spherical aberration correcting device such as an expander lens, it is enough to only provide an electrical offset to the focus. This leads to a rapid detection of the spherical aberration.

In one aspect of the information reproducing apparatus of the present invention, the spherical aberration detecting device is configured to detect the signal indicative of the spherical aberration contained in the probe light by detecting intensities of signals reproduced based on at least two target values obtained by the offset providing device generated on the signal of the predetermined spatial frequency recorded on the optical recording medium and by comparing the intensities of the reproduced signals toward the target values.

According to this aspect, from a rate of changes obtained based on the comparison, the spherical aberration can be detected fast.

In another aspect of the information reproducing apparatus of the present invention, the spherical aberration detecting device is configured to detect the signal indicative of the spherical aberration contained in the probe light by detecting intensities of signals reproduced based on the plurality of target values obtained by the offset providing device generated on the signal of the predetermined spatial frequency recorded on the optical recording medium and by detecting from the plurality of target values a particular target value showing a maximum intensity among the intensities of the signals reproduced based on the plurality of target values.

According to this aspect, the spherical aberration can be detected fast.

In further aspect of the information reproducing apparatus of the present invention, when the predetermined spatial frequency is ν, a wavelength of the probe light handled by the focus device is λ, and a numerical aperture for the probe light handled by the focus device is NA, a relationship of 1.25NA/λ< ν is realized.

According to this aspect, regulating the spatial frequency ν that meets the foregoing condition enables the spherical aberration to be calculated easily on the basis of the relationship between the intensities of signal to be reproduced and the spherical aberration.

The above object of the present invention can be achieved by an information reproducing apparatus provided with: a focusing device which makes a signal-reading probe light converge onto an optical recording medium; a focus servo device which maintains a focus on a recording layer of the optical recording medium by controlling the focusing device; an offset providing device which provides a predetermined offset to a target value used by the focus servo device; and a focus offset detecting device which detects a signal indicative of a shifted amount of an offset of the focus contained in the probe light on the basis of an intensity of a signal reproduced based on a plurality of target values obtained by the offset providing device generated on at least one signal of at least one predetermined spatial frequency recorded on the optical recording medium.

According to the present invention, it is enough to only give an focus offset as an electrical signal, which allows a shifted amount of focus offset to be detected.

In one aspect of the information reproducing apparatus of the present invention, the focus offset detecting device is configured to detect the shifted amount of the offset of the focus contained in the probe light by detecting intensities of signals reproduced based on at least two target values obtained by the offset providing device generated on the signal of the predetermined spatial frequency recorded on the optical recording medium and by comparing the intensities of the reproduced signals toward the target values.

According to this aspect, from a rate of changes obtained based on the comparison, a shifted amount of the focus offset can be detected quickly.

In another aspect of the information reproducing apparatus of the present invention, the focus offset detecting device is configured to detect the shifted amount of the offset of the focus contained in the probe light by detecting intensities of signals reproduced based on the plurality of target values obtained by the offset providing device generated on the signal of the predetermined spatial frequency recorded on the optical recording medium and by detecting from the plurality of target values a particular target value showing a maximum intensity among the intensities of the signals reproduced based on the plurality of target values.

According to this aspect, a shifted amount of the focus offset can be detected quickly.

In further aspect of the information reproducing apparatus of the present invention, when the predetermined spatialfrequency is ν, a wavelength of the probe light handled by the focus device is λ, and a numerical aperture for the probe light handled by the focus device is NA, a relationship of 1.25NA/λ>ν is realized.

According to this aspect, regulating the spatial frequency ν that meets the foregoing condition enables a shifted amount of the focus offset to be calculated easily on the basis of the relationship between the intensities of signal to be reproduced and the defocusing.

The above object of the present invention can be achieved by an information reproducing apparatus provided with: a focusing device which makes a signal-reading probe light converge onto an optical recording medium; a focus servo device which maintains a focus on a recording layer of the optical recording medium by controlling the focusing device; an offset providing device which provides a predetermined offset to a target value used by the focus servo device; a spherical aberration detecting device which detects a signal indicative of spherical aberration contained in the probe light on the basis of an intensity of a signal reproduced based on a plurality of target values obtained by the offset providing device generated on a signal of a first spatial frequency recorded on the optical recording medium; and a focus offset detecting device which detects a signal indicative of a shifted amount of an offset of the focus contained in the probe light on the basis of an intensity of a signal reproduced based on a plurality of target values obtained by the offset providing device generated on a signal of a second spatial frequency recorded on the optical recording medium.

According to the present invention, the parallel detection of both the spherical aberration and a shifted amount of the focus offset enhances the correction of those two factors.

In one aspect of the information reproducing apparatus of the present invention, the spherical aberration detecting device is configured to detect the signal indicative of the spherical aberration contained in the probe light by detecting intensities of signals reproduced based on at least two target values obtained by the offset providing device generated on the signal of the first spatial frequency recorded on the optical recording medium and by comparing the intensities of the reproduced signals toward the target values; and the focus offset detecting device is configured to detect the shifted amount of the offset of the focus contained in the probe light by detecting intensities of signals reproduced based on at least two target values obtained by the offset providing device generated on the signal of the second spatial frequency recorded on the optical recording medium and by comparing the intensities of the reproduced signals toward the target values.

According to this aspect, both the spherical aberration and a shifted amount of the focus offset can be detected simultaneously and accurately.

In another aspect of the information reproducing apparatus of the present invention, the spherical aberration detecting device is configured to detect the signal indicative of the spherical aberration contained in the probe light by detecting intensities of signals reproduced based on the plurality of target values obtained by the offset providing device generated on the signal of the first spatial frequency recorded on the optical recording medium and by detecting from the plurality of target values a particular target value showing a maximum intensity among the intensities of the signals reproduced based on the plurality of target values; and the focus offset detecting device is configured to detect the shifted amount of the offset of the focus contained in the probe light by detecting intensities of signals reproduced based on the plurality of target values obtained by the offset providing device generated on the signal of the second spatial frequency recorded on the optical recording medium and by detecting from the plurality of target values a particular target value showing a maximum intensity among the intensities of the signals reproduced based on the plurality of target values.

According to this aspect, both the spherical aberration and a shifted amount of the focus offset can be detected simultaneously and accurately.

In further aspect of the information reproducing apparatus of the present invention, when a wavelength of the probe light handled by the focus device is λ and a numerical aperture for the probe light handled by the focus device is NA, the first spatial frequency ν1 is determined to satisfy a relationship of $1.25NA/\lambda < \nu 1$ and the second spatial frequency ν2 is determined to satisfy a relationship of $1.25NA/\lambda > \nu 2$.

According to this aspect, the spherical aberration can be calculated easily on the basis of the relationship between the intensities of signal to be reproduced and the spherical aberration. And a shifted amount of the focus offset can be calculated easily on the basis of the relationship between the intensities of signal to be reproduced and the defocusing.

The above object of the present invention can be achieved by an optical recording medium having a region in which a signal to be detected is continuously recorded at a first spatial frequency and a further region in which a further signal to be detected is continuously recorded at a second spatial frequency, wherein when a wavelength of optical reading device is λ and a numerical aperture of the optical reading device is NA, the first spatial frequency ν1 is determinedto satisfy a relationship of $1.25NA/\lambda < \nu 1$ and the second spatial frequency ν2 is determined to satisfy a relationship of $1.25NA/\lambda > \nu 2$.

According to the present invention, a signal to be detected having a spatial frequency that satisfies the foregoing conditions can be recorded on an optical recording medium. This allows an information reproducing apparatus to rapidly obtain both the spherical aberration and a shifted amount of the focus offset on the basis of a signal detected from the optical recording medium. The information reproducing apparatus can achieve such performance without using a particular optical system.

In one aspect of the optical recording medium of the present invention, the regions are formed as a plurality of information tracks along which the signal to be detected is optically recorded as a pit or mark having a predetermined length providing information, wherein in at least part of a particular information track of the plurality of information tracks, arrays of pits or marks providing the same frequency are recorded on the particular information track and an information track adjacent to the particular information track, the pits or marks on the particular information track being mutually shifted in position by an amount of half of a period from the pits or marks on the adjacent information track.

According to this aspect, the pits or marks are shifted in position by an amount of half of a period between mutually adjacent tracks. Hence, even when the light spot includes a component of astigmatism, the intensity of a signal to be reproduced can be detected with precision. This makes the information reproducing apparatus detect the spherical aberration and a shifted amount of the focus offset with accuracy.

The above object of the present invention can be achieved by an optical recording medium having a plurality of information tracks along which a signal to be detected is optically recorded as a pit or mark having a predetermined length providing information, wherein in at least part of a particular information track of the plurality of information tracks, arrays of pits or marks providing the same frequency are recorded on the particular information track and an information track adjacent to the particular information track, the pits or marks on the particular information track being mutually shifted in position by an amount of half of a period from the pits or marks on the adjacent information track.

According to the present invention, the pits or marks are shifted in position by an amount of half of a period between mutually adjacent tracks. Hence, even when the light spot includes a component of astigmatism, the intensity of a signal to be reproduced can be detected with precision. This makes the information reproducing apparatus detect the spherical aberration and a shifted amount of the focus offset with accuracy.

In one aspect of the optical recording medium of the present invention, a length of a plane spacing formed between mutually adjacent two pits or marks residing on the particular track is approximately double of a length of a plane spacing formed between the center of particular track and a pit or mark residing on an adjacent information track to the particular information track in a direction particular to the particular information track.

According to this aspect, an isotropic plane spacings among each set of the pits or marks can be provided, and an influence of astigmatism can be reduced in a steady manner.

In another aspect of the optical recording medium of the present invention, the signal to be detected is recorded as a PEP (Phase Encoded Part) signal.

According to this aspect, the region on the optical recording medium can be used in common with a PEP region in which a low-frequency signal is recorded through the repetitions of mapping and non-mapping a region of pit arrays.

Brief Description of the Drawings

Other objects and aspects of the present invention will become apparent from the following description and embodiments with reference to the accompanying drawings in which:

FIG. 1 is an outlined schematic diagram showing a first embodiment of an information reproducing apparatus according to the present invention;
FIG. 2 represents the characteristic of changes in the amplitude of a detected signal having a spatial frequency that satisfies a predetermined condition;
FIG. 3A is a pictorial illustration for the change characteristic represented in FIG. 2;
FIG. 3B shows frequency characteristics at positions marked by the encircled numbers of 3 and 4 in FIG. 3A;
FIG. 4A exemplifies the detection of amounts of spherical aberration carried out by a system controller;
FIG. 4B exemplifies another type of the detection of amounts of spherical aberration carried out by a system controller;
FIG. 5 represents the characteristic of changes in the amplitude of a detected signal having a spatial frequency that satisfies a further predetermined condition;
FIG. 6 outlines the configuration of a third embodiment according to an information reproducing apparatus of the present invention;
FIG. 7 illustrates the detection of both the spherical aberration and an optimum amount to a focus offset;
FIG. 8 also illustrates the detection of both the spherical aberration and an optimum amount to a focus offset;
FIG. 9 pictorially shows a region of arrays of pits formed on an optical disc;
FIG. 10 pictorially shows part of a PEP region on the optical disc;
FIG. 11 pictorially shows a region of arrays of pits formed on an optical disc, like FIG. 9;
FIG. 12 shows graphs of signal modulation factors resulting from the region of pit arrays shown in FIG. 11;
FIG. 13 is an illustration showing a region of pit arrays on an optical disk having the spatial frequency ($\nu$1 or $\nu$2), but being different from that in FIG. 9; and
FIG. 14 shows graphs of signal modulation factors resulting from the region of pit arrays shown in FIG. 13.

Best Mode for Carrying Out the Invention

Refering to the accompanying drawings, preferred embodiments of the present invention will now be described. An information reproducing apparatus according to the present invention will be described at first, and then an optical recording medium for enhancing the advantages provided by the information reproducing apparatus will be described.

(Information reproducing apparatus)

(First embodiment)

An information reproducing apparatus according to the first embodiment is characteristic of detecting a signal corresponding to spherical aberration included in a reading probe light (laser light) on the basis of the intensity of a reproduced signal of a predetermined spatial frequency recorded on the optical recording medium.

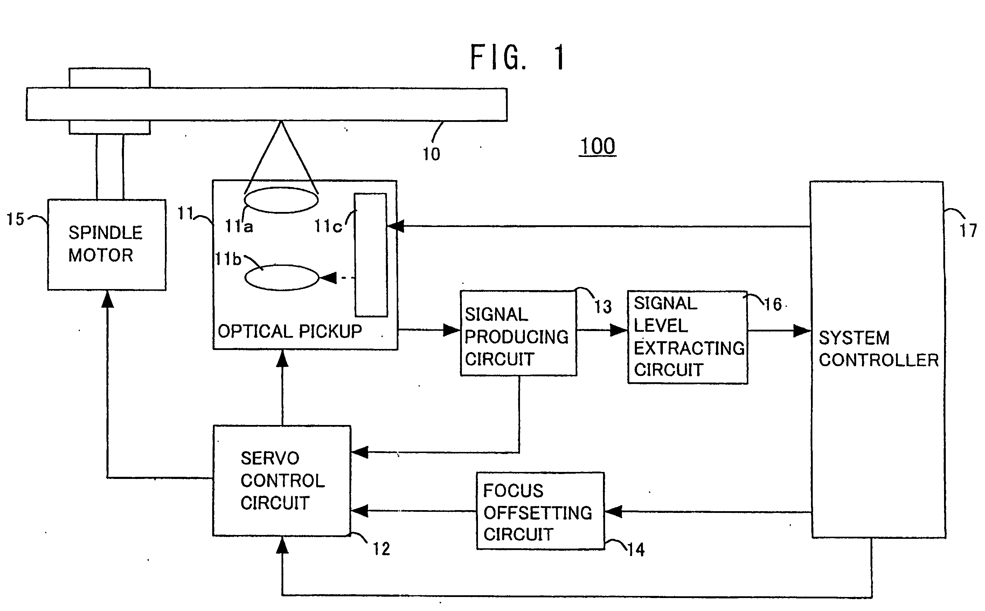

FIG. 1 outlines a schematic configuration of an information reproducing apparatus 100 according to the first embodiment. As shown therein, the information reproducing apparatus 100 is provided with an optical pickup 11, servo control circuit 12, signal producing circuit 13, focus offset circuit 14, spindle motor 15, signal level extracting circuit 16, and system controller 17. Of these constituents, the optical pickup 11 comprises an objective lens 11a serving as a focusing device for making a signal-reading probe light converge onto an optical recording medium 10 (hereinafter, referred to as an"optical disc"). Using the objective lens 11a, the servo control circuit 12 serving as a focus servo device operates so as to maintain a focus of the light on a recorded surface of the optical disc 10. The focus offsetting circuit 14 serving as an offset providing device gives a predetermined offset to a target value required by the servo control circuit 12. The signal level extracting circuit 16 is responsible for extracting a signal detected correspondingly to a predetermined spatial frequency recorded on the optical disc 10. Based on the intensity of the extracted signal (detected signal), the system controller 17, which serves as a spherical aberration detecting device, detects a signal corresponding to spherical aberration included in the probe light.

More practically, the optical pickup 11 has an optical source (of which wavelength is $\lambda$) and radiates the signal-reading probe light (laser light). This light reaches the objective lens 11a as a parallel laser beam via the expander 11b functioning as spherical aberration correcting device. The objective lens 11a has a numerical aperture of NA and is responsible for making the probe light converge onto the recorded surface of the optical disc 10. The probe light reflected from the recorded surface travels through both the objective lens 11a and the expander lens 11b, then enters a not-shown photo detector. At the photo detector, the reflected probe light is converted into a corresponding electrical signal, and the signal is then supplied to the signal producing circuit 13. The expander lens 11b is driven tomove in parallel in its optical axis direction in response to a signal from a drive circuit 11c. The drive circuit 11c is configured to receive a spherical aberration correcting command sent from the system controller 17, as will be described later. This configuration enables the correction (i.e., compensation) of the spherical aberration.

The signal producing circuit 13 produces various types of signals according to different objectives, from the electrical signal converted at the optical pickup 11. The produced signals are then sent to the signal level extracting circuit 16.

The servo control circuit 12 is provided with a tracking coil and a focus coil, in charge of both tracking servo control and focusing servo control of the optical pickup 11. That is, both a tracking error signal and a focus error signal are used to drive not merely the tracking coil in the radial direction of the optical disc 10 but also the focus coil for controlling a focus of the probe light. Using a control signal sent from the system controller 17, the servo control circuit 12 performs control on the spindle motor 15 so that the optical disc 10 is driven to rotate at a predetermined rotation speed.

The focus offsetting circuit 14 responds to a focus offset command provided from the system controller 17, as will be described later. This response gives a predetermined offset amount to a target value necessary for the focusing servo control carried out in the servo control circuit 12, thereby the target value being offset by a predetermined amount.

The signal level extracting circuit 16 includes a BPF (Band Pass Filter) and an amplitude level extracting circuit. The BPF operates to extract only a signal of a specified spatial frequency from the signal that has been read from the optical disc10. On the other hand, the amplitude level extracting circuit operates to extract the amplitude level of the signal, that is, the detected (extracted) signal intensity at predetermined clocking periods. The detected signal intensity is sent to the system controller 17.

The system controller 17 is equipped with a CPU for calculation, a ROM for storing therein a predetermined program and various data, and a RAM serving as a work area. In addition to controlling the operations of the entire apparatus 100, the system controller 17 is responsible for controlling the correction of spherical aberration. For this control, the detected (extracted) signal strength (i.e., amplitude level) sent from the signal level extracting circuit 16 is used to detect spherical aberration (in the form of a signal indicative of spherical aberration), as will be described later. Data indicative of the amplitude level of the signal supplied from the signal level extracting circuit 16 are sequentially stored into the RAM.

In the first embodiment, when considering the wavelength $\lambda$ of the optical source and the numerical aperture NA of the objective lens 11a, it is required that a spatial frequency $\nu 1$ of the detected (extracted) signal obtained from the signal level extracting circuit 16 satisfy the following condition (1):

$$\nu 1 = 1.25 NA/\lambda \qquad (1)$$

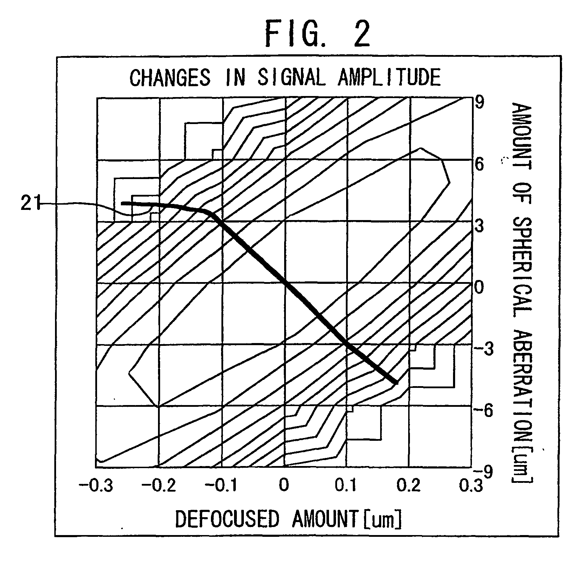

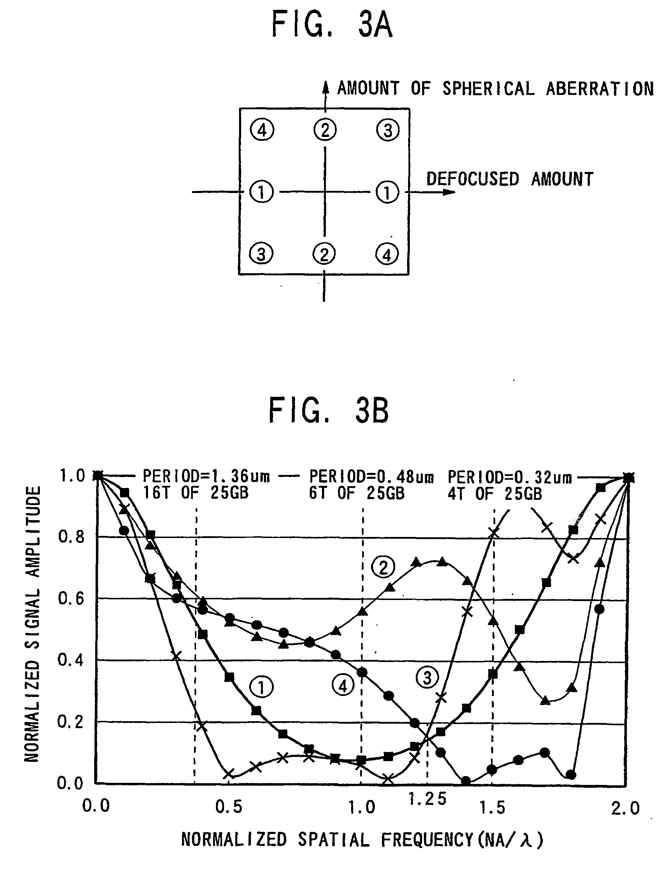

FIG. 2 shows a characteristic of changes in amplitudes of the detected signal of which spatial frequency satisfies the condition (1). The present inventors confirmed that changes in the amplitude of the detected signal of such spatial frequency were characterized by contours like shown in FIG. 2. FIG. 3A pictorially shows the characteristics shown in FIG. 2. The encircled number 3 in FIG. 3A shows a region of which amounts of both spherical aberration and defocusing are positive or negative. The encircled number 4 in FIG. 3A shows a region of which amount of spherical aberration is positive and defocused amount is negative, or of which amount of spherical aberration is negative and defocused amount is positive. FIG. 3B shows frequency characteristics of the regions indicated by the encircled numbers 3 and 4 in FIG. 3A. Clearly understood from FIG. 3B, at a boundary defined by a normalized spatial frequency of 1.25 NA/$\lambda$, the largeness relationship of the two curves shown by the encircled numbers 3 and 4 is changed oppositely. The relationship between these characteristics and loci of focus-close positions obtained when spherical aberration is corrected as will be described later is used for selection of a spatial frequency according to the way of the detection.

In FIG. 2, the lateral axis represents defocused amounts measured from the most excellent point at which the probe light is most narrowly focused, while the longitudinal axis represents amounts of spherical aberration that remains when the probe light from the optical pickup 11 is made to converge onto the optical disc 10. For the sake of an easier understanding, however, the indicated amounts of spherical aberration are converted to amounts corresponding to production errors in the thickness of a disk-covering layer. Contours displayed in FIG. 2 represent lines each connecting the same amplitude of each signal whose spatial frequency is a specified value. The closer to the center of the coordinate plane shown in FIG. 2, the more the amplitude of a signal. As shown in FIG. 2, the signals show large amplitudes over an oblique region ranging from positions of which amounts of both the defocusing and spherical aberration are positive (that is, positions at which the optical disc 10 is large in thickness from the optical pickup 11) to positions of which amounts of both the defocusing and spherical aberration are negative, and changes in the amplitude of the signal are tilted to the right in the figure.

A bold line 21 shown in FIG. 2 represents a locus of focus-close positions obtained when the spherical aberration is corrected with the expander lens 11b moved under operation of the focusing servo of the optical pickup 11. The focus-close positions change in response to changes in amounts of the compensated spherical aberration, and are tilted to the left in the figure. If an optical pickup is previously adjusted in an amount of offset of the focus, the optical pickup exhibits the locus 21 whose defocused amount becomes zero at the position showing an amount of spherical aberration is zero.

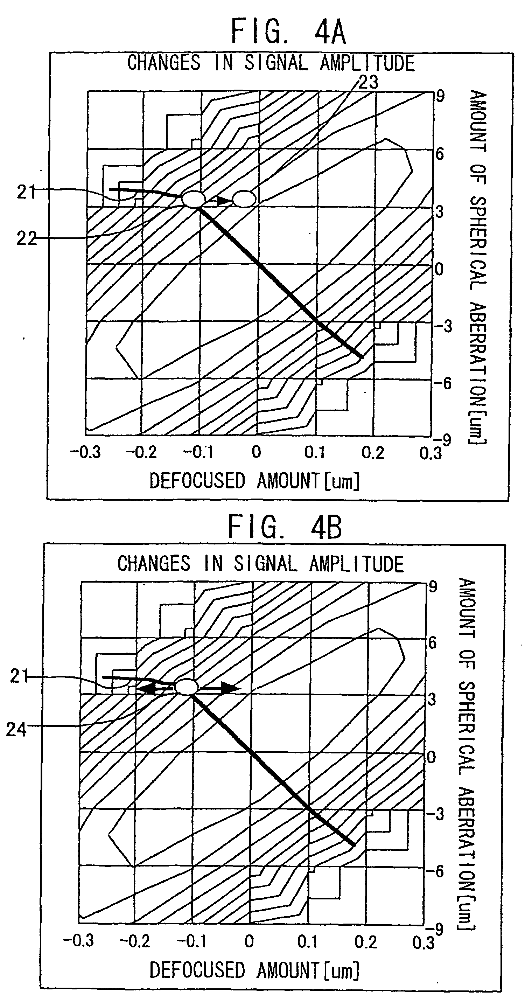

FIG. 4A illustrates the detection of an amount of spherical aberration carried out by the system controller 17.

The example of FIG. 4A shows that, in cases where the optical pickup 11 has a certain amount of spherical aberration to the optical disc 10, the focus servo control of the optical pickup 11 is initially operated at a position 22. The system controller 17 then sends to the focus offsetting circuit 14 a command indicating a positive, but a small, amount of offset of the focus (hereafter, offsetting the focus is simply referred to as "focus offset").

In response to this command, the focus offsetting circuit 14 gives a certain amount of offset to a target amount of the focus servo control prepared in the servo control circuit 12. As a result, the focus servo control with the offset target amount is carried out to control the focus so that it moves from the initial position 22 to another position 23, as shown in FIG. 4A. The system controller 17 then detects the amplitude of the detected (extracted) signal from the reflected light signal detected correspondingly to the position 23. In the system controller 17, the detected signal amplitude is then compared with a signal amplitude correspondingly to the initial position 22, which has been stored in the RAM. An amount of the spherical aberration is obtained based on the compared result (a difference between the signal amplitudes, that is, a changed amount of the amplitude).

Practically, at a pit (or mark) having a spatial frequency satisfying the foregoing condition (1), the amount of spherical aberration becomes large as the difference between signal amplitudes acquired correspondingly to both the positions 22 and 23 increases, as shown in FIG. 4A. Such difference can be obtained by subtracting a level of amplitude of the detected signal correspondingly to the position 22 from that correspondingly to the position 23. Further, if the polarity of such difference is positive, the amount of spherical aberration shows a positive polarity. These facts allow the system controller 17 to detect an approximate amount of spherical aberration and its polarity.

For instance, the example in FIG. 4A shows that the signal amplitude increase as the detection changes from the position 22 to the position 23. Hence, the system controller 17 is able to detect an approximate amount of spherical aberration occurring correspondingly to the position 22 on the basis of the increase.

Based on a result of the foregoing comparison, the system controller 17 then gives the drive circuit 11c a command for correcting the detected amount of spherical aberration. To be specific, if the compared result shows a positive amount of spherical aberration, the correcting command is issued to the drive circuit 11c in such a manner that the expander lens 11b is moved by a specified distance in a direction corresponding to negative amounts of the spherical aberration.

The system controller 17 will repeat the comparison of signal amplitudes and servo control operations reflected by its compared result. This repeated comparison and control diminishes the difference between signal amplitudes, when the focus is commanded to be offsetted, thus the control converging at a specified value. The system controller 17 is therefore able to make comparison between signal amplitudes at two or more positions, detect the spherical aberration based on a difference between signal amplitudes, and correct the spherical aberration.

In other words, in the detection shown in FIG. 4A, a signal indicative of the spherical aberration can be detected, because the characteristic of changes of amplitude of the detected (extracted) signal is tiltedto the right in FIG. 2. It is required that the characteristic tilted to the right use the spatial frequency that meets the foregoing condition (1). However, if there occur a shift in the focus offset, the foregoing detection technique is not suitable for accurately canceling the spherical aberration. In such a case, the shift in the focus offset should be cancelled at the same time. This canceling technique will be described in a third embodiment.

FIG. 4B illustrates the detection of an amount of spherical aberration carried out by the system controller 17, but shows a different example from that of FIG. 4A.

The example of FIG. 4B shows that, in cases where the optical pickup 11 has a certain amount of spherical aberration to the optical disc 10, the focus servo control of the optical pickup 11 is initially operated correspondingly to a position 24. The system controller 17 then sends to the focus offsetting circuit 14 a command to offset the focus so that an offset amount of the focus is swept.

The system controller 17 detects amplitudes of the detected (extracted) signals during sweeping the amount of the focus offset. In the system controller 17, the detected amplitudes are memorized in the RAM, and compared with each other to calculate a certain amount of the focus offset obtained when the detected signal shows its maximum amplitude. When such certain amount of the focus offset is positive, the system controller 17 provides the drive circuit 11c with a spherical aberration correcting command to cause a negative spherical aberration. In response, the drive circuit 11c is driven. In contrast, if such certain offset amount obtained when the detected signal shows its maximum amplitude is negative, the system controller 17 provides the drive circuit 11c with a spherical aberration correcting command to cause a positive spherical aberration. In response, the drive circuit 11c is driven.

For the example shown in FIG. 4B, like that in FIG. 4A, the system controller 17 will repeat the comparison of signal amplitudes and servo control operations reflected by its compared result.

When using the detection technique according to FIG. 4A, it is possible to detect an amount of the focus offset at a faster speed. By contrast, it takes a relatively longer time for the detection technique shown in FIG. 4B to detect an amount of the focusoffset, butthedetectioncanbedonewithprecision. Hence, both of the detection techniques may be combined such that the detection technique shown in FIG. 4A is first carried out for a coarse adjustment, which is followed by that shown in FIG. 4B for a fine adjustment.

As described above, in the first embodiment, without installing a particular optical configuration into the optical pickup 11 and without moving the expander lens 11b, only an offset is electrically given to the focus, with the result that the spherical aberration can be detected quickly. Based on an amount of spherical aberration that has been detected, the spherical aberration can be corrected. Furthermore, when the information reproducing apparatus uses an objective lens of which numerical aperture is large, it is possible to raise resistance to fluctuations in the thickness of the covering layer of an optical disc adopted in the apparatus. This improves a density of recording, thus greatly contributing to a higher density of recording on optical discs and enhanced performances of optical discs.

(Second embodiment)

Referring mainly to FIGs. 2, a second embodiment of an information reproducing apparatus according to the present embodiment will now be described. The information reproducing apparatus according to the second embodiment is characteristic of setting an optimum amount to the focus offset by using intensity of a signal recorded on an optical recording medium so as to have a predetermined spatial frequency.

The information reproducing apparatus in this embodiment is configured in a similar manner to that in the first embodiment except the signal level extracting circuit 16 and the system controller 17. The extracting circuit 16 is configured to extract a signal component having a spatial frequency different from that in the first embodiment and the system controller 17 is configured to perform predetermined processing different from that in the first embodiment. The system controller 17 functions as focus offset detecting device in the present embodiment.

Referring to FIG. 1 again, the construction of the information reproducing apparatus according to the second embodiment will now be explained, in which the configurations different from the first embodiment will be explained mainly.

In the second embodiment, when considering the wavelength $\lambda$ of the optical source and the numerical aperture NA of the objective lens 11a, it is required that a spatial frequency $\nu 2$ of the detected (extracted) signal provided from the signal level extracting circuit 16 satisfy the following condition (2) :

$$\nu 2 < 1.25 NA/\lambda \qquad (2)$$

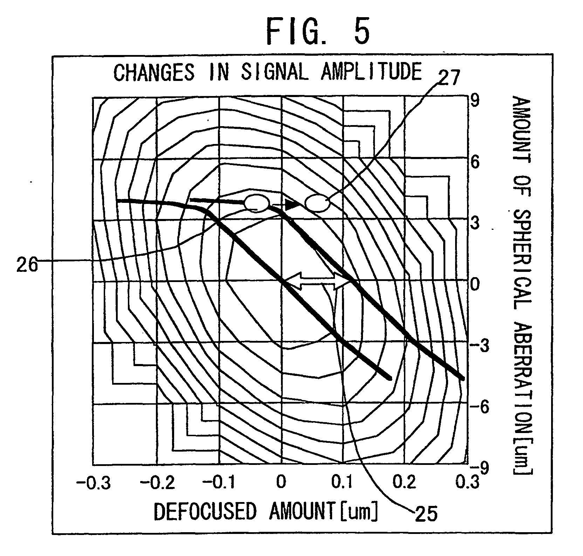

FIG. 5 shows a characteristic of changes in amplitudes of the detected detection signal of which spatial frequency satisfies the condition defined by the condition (2). Thepresent inventors confirmed that changes in the amplitude of the detected signal of such spatial frequency were characterized by contours shown in FIG. 5. With respect the lateral and longitudinal axes and the display of the contours, FIG. 5 employs the same manner as those in FIG. 2.

Like FIG. 2, in FIG. 5, the closer to the center of the coordinate plane shown in FIG. 5, the larger the amplitude of the signal. However, in the case of FIG. 5, changes in the amplitude of the signal are tilted to the left in the figure, which is opposite to the tilt shown in FIG. 2. This shows that the tilt in the changes at a spatial frequency of approximate 1.25NA/$\lambda$. Further, the changes in the signal amplitude show that, if an optical pickup of which focus offset is adjusted correctly is used and the expander lens is moved to change the spherical aberration, a locus 21 indicative of the positions of a focus is almost equal, in the tilt to the left, to the changes in the signal amplitude and passes through nearly a central part in the distribution of the changes in the signal amplitude.

The example of FIG. 5 shows that, in cases where the optical pickup 11 has a certain shifted amount of spherical aberration (which is shown by a reference 25 in the figure to the optical disc 10, the focus servo control of the optical pickup 11 is initially operated correspondingly to a position 26. The system controller 17 then sends to the focus offsetting circuit 14 a command indicating a positive, but a small, amount of focus offset.

In response to this command, the focus servo control works in the similar manner to that in the first embodiment, so that the focus is controlled. As a result, the focus moves from the initial position 26 to another position 27, as shown in FIG. 5. The system controller 17 then detects a level of amplitude of the detected signal correspondingly to the position 27. In the system controller 17, the amplitude of the detected signal is compared with the amplitude of the detected signal correspondingly to the initial position 26, which has been stored in the RAM. A shifted amount of the focus offset is obtained based on the compared result (a difference between the signal amplitudes, that is, a changed amount of the amplitude).

That is, as shown in FIG. 5, the larger a difference between the signal amplitudes correspondingly to both the positions (an amount obtained by subtracting a level of the signal amplitude to the position 26 from that to the position 27), the larger a shifted amount of the focus offset. Further, if the polarity of such difference is negative, the polarity of a shifted amount of the focus offset is positive.

For example, in the example of FIG. 5, as the focus is moved responsively to a transition of the control from one position 26 to the other position 27, the amplitude of the detected signal will decrease to some extent. Hence the system controller 17 uses this decrease to detect a shifted amount of the focus offset.

Based on the compared result, the system controller 17 sends a focus offset command to the focus offsetting circuit 14 so that a shifted amount of the focus offset becomes zero, that is, the focus offset is set to an optimum. Thus, a shifted amount of the focus offset can be diminished, thereby positionally correcting the focus to its best focus position.

Additionally, as explained in the first embodiment according to FIG. 4B, amounts of the focus offset may be swept to detect shifted amounts of the focus offset.

As described with respect to FIG. 5, using the characteristics of amplitude of the signal tilted to the left enables a shifted amount of the focus offset to be detected correctly, even if the spherical aberration occurs. To obtain the characteristics of amplitude of the signal tilted to the left, the condition (2) should be satisfied.

Therefore, as described above, the information reproducing apparatus according to the second embodiment makes it possible to detect a shifted amount of the focus offset, in cases where the spherical aberration is not corrected. Such detection is made based on the intensity of a signal having a predetermined spatial frequency, the signal being detected from the reflected light. The shifted amount of the focus offset can be used to find an optimum focus offset.

(Third embodiment)

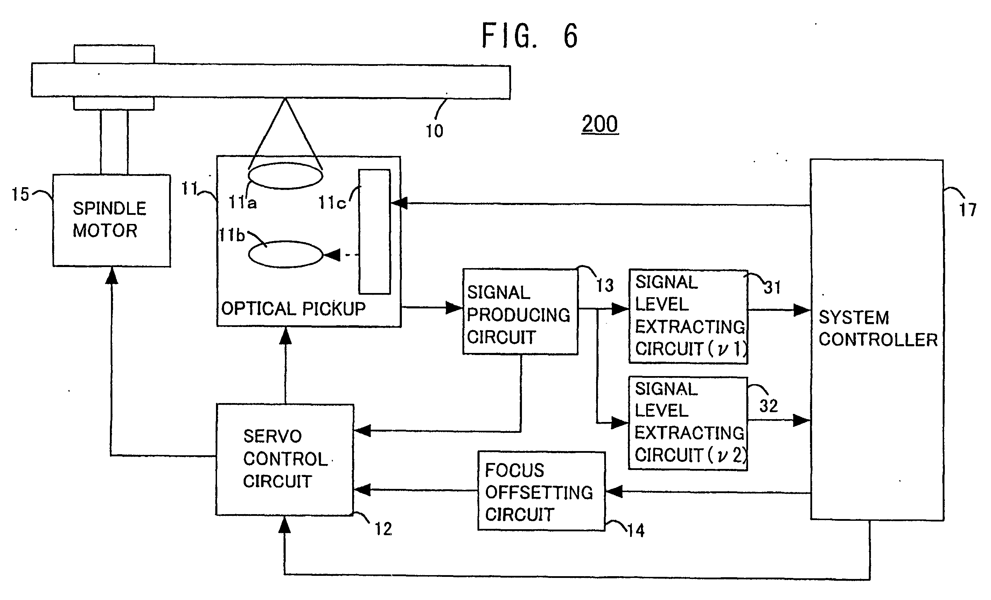

Referring to FIGs. 6 to 8, a third embodiment of the information reproducing apparatus according to the present invention will now be described. The third embodiment concerns a configuration in which the forgoing first and second embodiments are combined with each other, which causes a signal indicative of the spherical aberration to be detected and the focus offset to be an optimum.

FIG. 6 outlines a configuration of an information reproducing apparatus 200 according to the third embodiment. As shown therein, the information reproducing apparatus 200 differs from the apparatus 100 shown in FIG. 1 in that the apparatus 200 has two signal level extracting circuits 31 and 32. The remaining of the configuration is identical to that shown in the first embodiment, the remaining therefore being omitted from explanation to avoid its redundancy.

Both of the signal level extracting circuits 31 and 32 are configured to extract signals from the received signal, respectively, spatial frequencies of the detected (extracted) signals being different from each other. In the present embodiment, one signal extracting circuit 31 is in charge of the extraction of a signal having a spatial frequency of ν1 that meets the condition(1) described in the first embodiment. The other signal extracting circuit 32 is in charge of the extraction of a second signal having a spatial frequency of ν2 that meets the condition(2) described in the second embodiment. Changes of the amplitude of the first signal that meets the condition (1) have the characteristics shown in FIG. 2, whereas changes of the amplitude of the second signal that meets the condition (2) have the characteristics shown in FIG. 5.

Based on the amplitude of the first signal supplied from the signal level extracting circuit 31, the system controller 17 detects a current amount of spherical aberration. Concurrently, based on the amplitude of the second signal supplied from the signal level extracting circuit 32, the system controller 17 detects an optimum of the focus offset.

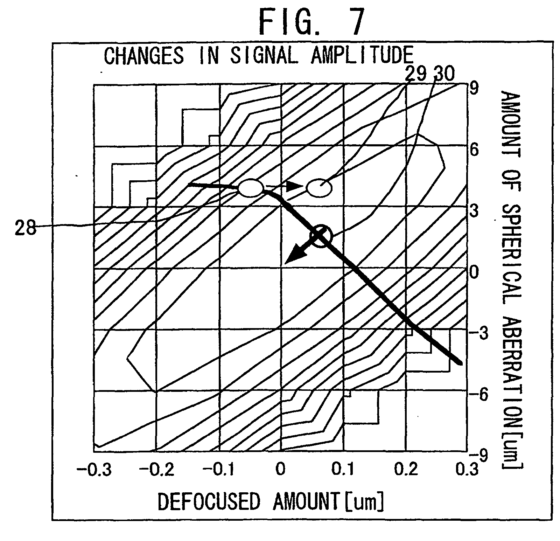

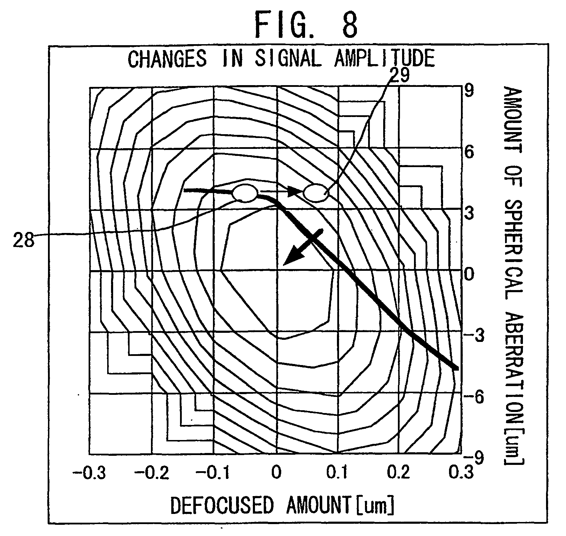

FIG. 7 exemplifies how to detect the spherical aberration and FIG. 8 illustrates how to detect an optimum of the focus offset.

In the examples in FIGs. 7 and 8, it is assumed that the optical pickup 11 brings about, on the optical disc 10, both of a certain amount of spherical aberration and a certain shifted amount of focus offset. Also assumption is made such that an initial position on the figure obtained when the focus servo control is performed is shown by a reference 28 in FIGs. 7 and 8, respectively. In response to this initial state, the system controller 17 issues to the focus offsetting circuit 14, for example, a command for offsetting the focus by a positive, small-distance amount.

Like the first and second embodiments, this command causes the focus servo control to be effective. The focus is therefore controlled in position, thus the position 28 being moved to a new position 29 in FIGs. 7 and 8, respectively. The system controller 17 reads amplitude levels of the two detected signals obtained correspondingly to the new position 29 from both the signal level extracting circuits 31 and 32. The system controller 17 performs mutual comparison on the amplitudes of the detected signal supplied from the signal level extracting circuit 31, which are obtained correspondingly to the two positions 28 and 29. Based on a compared result (a difference between the signal amplitudes (i.e., a changed amount)), the controller 17 then detects an amount of spherical aberration in the similar manner to the first embodiment. Concurrently, the system controller 17 performs mutual comparison on the amplitudes of the detected signal supplied from the signal level extracting circuit 32, which are obtained correspondingly to the two positions 28 and 29. Based on a compared result (a difference between the signal amplitudes (i.e., a changed amount)), the controller 17 then detects a shifted amount of focus offset in the similar manner to the second embodiment.

In the example of FIG. 7, when the control moves from one position 28 to the other position 29, the amplitude of the signal increases. On the other hand, in the example of FIG. 8, the amplitude of the signal decreases to some extent. The system controller 17 uses these facts to recognize that both the spherical aberration and a shifted amount of the focus offset are positive.

Based on a result of the comparison, the system controller 17 sends not only a focus offset command for bringing the focus offset into its optimum to the focus offsetting circuit 14 but also a spherical aberration correcting command for compensating the spherical aberration to the drive circuit 11c. As described above, the system controller 17 will repeat the comparison of signal amplitudes and the control based on its compared result, resulting in that the focus offset is adjusted to its optimum and the spherical aberration is corrected.

In such operations, if a shifted amount of the focus offset is not adjusted, the detection of the spherical aberration is made to converge onto a position 30 shown in FIG. 7. This will not give a sufficient effect to the correction of the spherical aberration. Therefore, in order to solve such a problem, a shifted amount of the focus offset is detected concurrently with the detection of the spherical aberration, so that both the adjustment of the focus offset and the correction of the spherical aberration can be done much effectively.

In addition, the information reproducing apparatus according to the third embodiment may be made to operate such that an offset amount of the focus is swept (scanned) as shown in FIG. 4B in the first embodiment. This also makes it possible to not only adjust an offset that should be given to the focus but also correct the spherical aberration.

According to the third embodiment, with an offset that should be given to the focus of an optical beam adjusted to its optimum amount, the spherical aberration can be corrected with precision.

In the foregoing first to third embodiments, various modifications are still possible. For example, in those embodiments, the focus offset has been given in its positive direction to conduct the detection. However, how to give the offset is not limited to such a manner. The focus offset may be given in its negative direction. Further, the detection may be carried out during which an offset given to the focus is swung in offset amounts.

Another modification concerns with spherical aberration correcting device. In the foregoing first to third embodiments, the spherical aberration correcting device has been explained about the configuration of moving the expander lens in the light beam axis direction. How to correct the spherical aberration is, however, not limited to the explained one, but any configuration may be employed, as long as it is capable of lowering the spherical aberration. Further, the spherical aberration correcting device can be performed, if necessary, in combination with a technique that requires the spherical aberration to be swung in its amounts.

(Optical information recording medium)

An optical disc 10 will now be described as an optical recording medium according to the present invention.

The signal detected by the foregoing information reproducing apparatus is additionally recorded on the optical disc 10 as additional pits to provide signals each of which spatial frequency is a predetermined value (hereafter, such pits are simply referred to as "pits"). In the case of the first embodiment, pits each providing a spatial frequency $\nu 1$ that meets the condition(1) are recorded (formed) on the optical disc 10. In the second embodiment, pits each providing a spatial frequency $\nu 2$ that meets the condition (2) are recorded on the optical disc 10. Furthermore, in the third embodiment, both types of pits, one type of pits each providing a spatial frequency $\nu 1$ that meets the condition (1) and the other type of pits each providing a spatial frequency $\nu 2$ that meets the condition (2), are recorded on the optical disc 10.

The signals to be detected, which are recorded in the form of pits each showing the predetermined spatial frequency, may be recorded on any region on the optical disc 10. For example, the signals (that is, the pits) may be recorded in a particular region for detecting the signal, a region in which pieces of video and audio information are recorded, and/or a region in which address information is recorded.

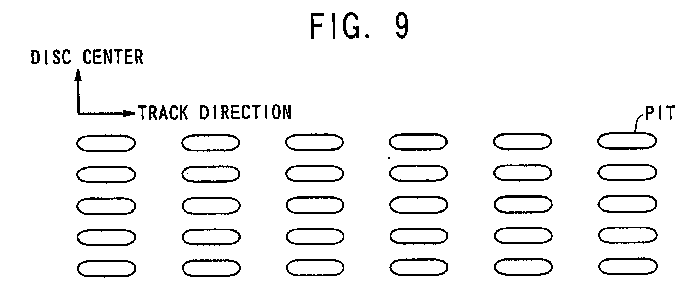

FIG. 9 shows a region in which arrays of pits are formed (hereafter, referred to as a "pit-array region") on the optical disc 10, each pit providing the predetermined spatial frequency. In the example of fig. 9, the pits providing the same frequency are formed over a plurality of tracks in an in-phase state. It is therefore possible that the signal of the predetermined spatial frequency can be read out without tracking servo control, and fundamental setting can be done for determining operations of a system.

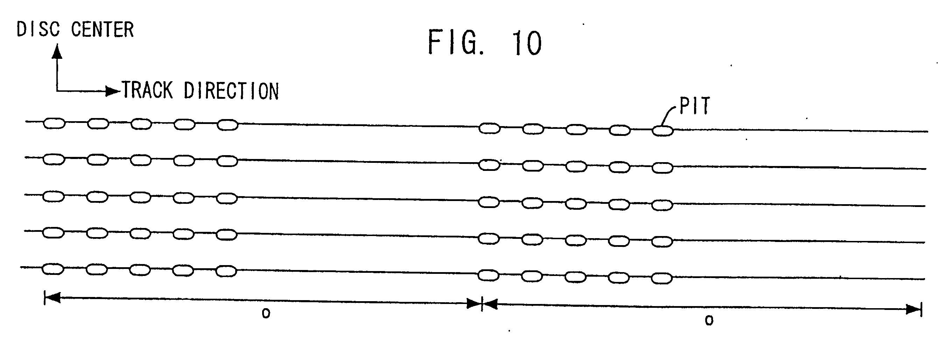

Further, the signal of the predetermined spatial frequency may be recorded, as a PEP (Phase Encoded Part) signal, in a region referred to as a PEP disclosed by Japanese Patent Publication No.2543523. The PEP signal can also be created as described in the publication. FIG. 10 shows part of the PEP region formed on the optical disc 10. As shown therein, each pit-array region in the PEP region has a single bit of information. In each pit-array region, like FIG. 9, pits having the same frequency are recorded over a plurality of tracks in an in-phase state. Alternatively, in each pit-array region, pits may be recorded so as to have the foregoing spatial frequency.

By the way, there is a problem concerning astigmatism of a light spot. The foregoing information reproducing apparatus includes the objective lens 11a as a focusing device, and the objective lens 11a radiates a probe light beam onto the recorded surface of the optical disc 10 as a light spot. In cases where the light spot is influenced by astigmatism, to use the pit-array region whose plural tracks are in-phase with each other in the track direction as shown in FIG. 9 or 10 will cause large changes in degree of signal modulation (i.e., intensity of a detected signal) at the focused spot position. If this degree of signal modulation is used for detecting spherical aberration or examining some characteristic of the optical disc, there arises a problem that such detection or examination is short of reliability.

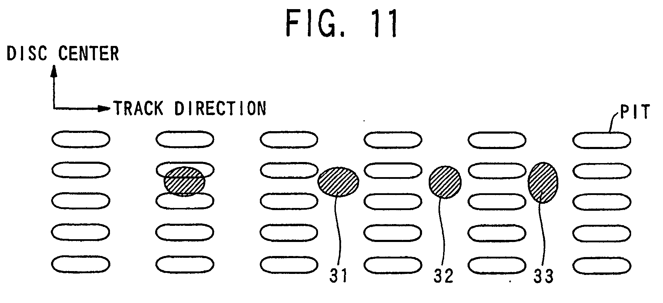

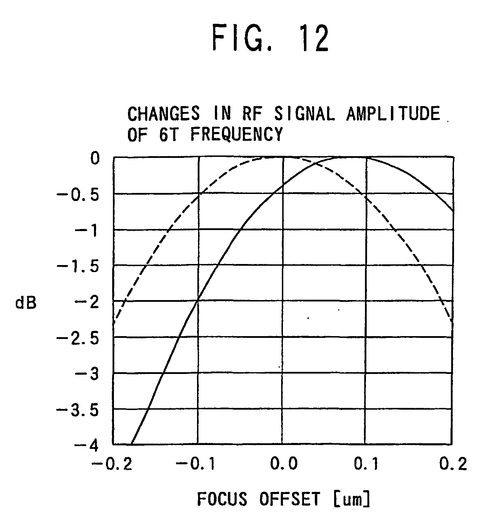

In particular, an optical source, such as a semiconductor laser source, also causes astigmatism, and such astigmatism is included in the astigmatism occurring at the spot in the parallel and perpendicular direction to the tracks. This will raise the probability of generating the astigmatism at the spot. FIG. 11 shows a pit-array region formed on the optical disc 10, like that shown in FIG. 9. If a light spot includes the astigmatism caused for example in the track direction, the light spot changes its shape depending on focal point positions in the track direction, as depicted by light spots 31, 32 and 33 in FIG. 11. FIG. 12 shows a graph indicative of the degree of signal modulation in the pit-array region shown in FIG. 11, in which a dotted line represents a characteristic with no astigmatism, whereas a solid line represents a characteristic with a certain amount (approximately 40 mλ) of astigmatism. As shown in FIG. 12, if the astigmatism arises, a maximum-signal-intensity point in the focus shifts largely, so that the degree of signal modulation cannot be obtained correctly. This drawback will lead to a lowered accuracy in the detection of both spherical aberration and a shifted amount of focus offset.

To overcome the foregoing difficulty, an optical disc 10 is provided as below, which has a modulation pattern resistant to influence of the astigmatism and enables a steady detection of the degree of signal modulation (i.e., intensity of a detected signal) even when a light spot including the astigmatism is used.

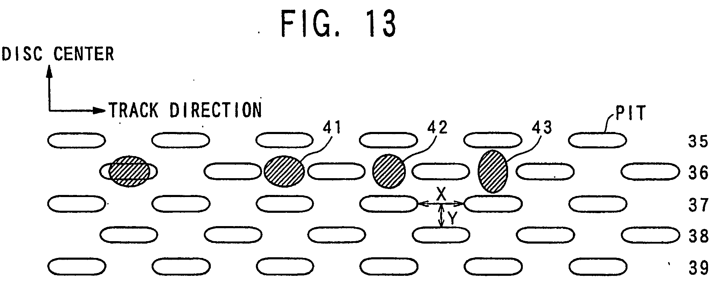

FIG. 13 shows a pit-array region on the optical disc 10, which is different in a pit pattern from that in FIG. 9 but has the foregoing spatial frequency (ν1 or ν2). As shown in FIG. 13, each of tracks 35 to 39 includes an array of pits whose lengths are almost the same with each other. However, the array of pits that each track includes is shifted between two adjacent tracks by half of a period that corresponds to the length of one pit in the track direction. This arrangement on the half-shift technique makes it possible to map a constant-size pit in a vacant spacing between tracks in a dispersed manner. Thus, even if a light spot that has astigmatism in the track direction is located at one focal line position 41, a minimum circle-of-confusion position 42, or the other focal line position 43, a change in the degree of signal modulation is reduced. This is because a spacing at which the light spot is located is enlarged thanks to the arrangement on the half-shift technique.

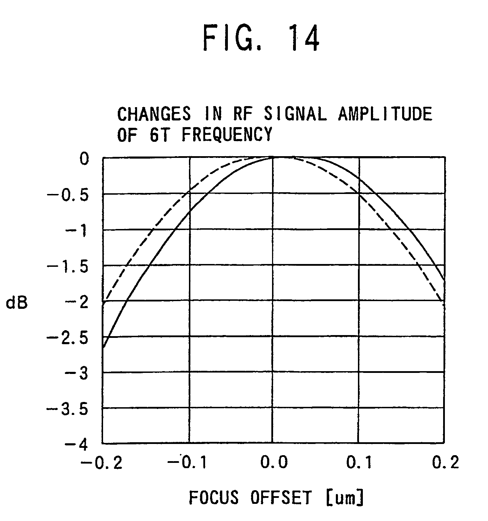

If selecting the length X of a plane spacing formed between two adjacent pits on the same track into approximately an amount equal to double the length Y of a plane spacing measured from the center of the track to a pit formed on an adjacent track, isotropic spacings are obtained among four pits as shown in FIG. 13. The isotropic spacings are able to lower the influence of the astigmatism in an effective manner. FIG. 14 is a graph showing the degree of signal modulation that can be obtained from the arrangement of the pits shown in FIG. 13. In FIG. 14, the dotted represents a characteristic obtained when there is noastigmatism, whereas the solid line represents characteristic obtained when there is a certain amount (approximately 40 mλ) of astigmatism. As clear from FIG. 14, a change between both the characteristics with and without the astigmatism is fairly smaller than that shown in FIG. 12. This advantage becomes noticeable particularly in a range of the characteristics in which the diameter of the light spot is smaller than the pitch of the tracks.

Furthermore, the present inventors confirmed that the above-said advantage became greater in cases where the numerical aperture of the objective lens 11a that creates a light spot is 0.8 or more.

Incidentally, it is sufficient for the foregoing pit-array region that the region has a length to allow a degree of signal modulation (i.e., intensity of an extracted signal) to be detected Still, pits may be arranged such that such pit-array region and no pit region are repeatedly mapped, like the pit arrangement in FIG. 11. Thus, such repeated arrangement of pits may be used in common with the PEP region to record a lower frequency of signal.

This configuration makes it possible that the width of each track is allowed to increase up to a certain amount that is able to absorb amounts of shift of the tracks due to their eccentricity, without use of tracking servo control. Adjustment in association with convergence of a light spot canbe facilitated.

As described above, the optical disc on which the modulation pattern reluctant to the influence of astigmatism is provided. Hence, if a light spot that involves astigmatism is radiated, the degree of signal modulation can be detected in a precise manner. The foregoing information reproducing apparatus is therefore able to increase in precision the detection of both spherical aberration and shifts to focus offset. In such a configuration, for example, the spatial frequencies of $\nu 1$ and $\nu 2$ can be assigned to the same track region in a region-divided manner, frequency by frequency. Alternatively, one spatial frequency $\nu 1$ may be assigned in the radial direction (i.e., as a track pitch frequency), while the other spatial frequency $\nu 2$ may be assigned in the track direction. Therefore, two types of signals having different spatial frequencies may be set to the same pit-array region. The recording density can therefore be increased, which thus contributes to provide higher-density optical recording mediums and high-performance information reproducing apparatuses.

In cases where longer pits are arranged on an optical disc, an amount of phase shift from an adjacent track is not necessarily restricted to the exact half of the period in the track direction. As long as an isotropic spacing is formed among pits, any amount of the phase shift can be selected, the similar advantages to those described before being provided.

Further, in the foregoing embodiments, the optical disc has been directed to various type of detection. That is, the degree of modulation of a detected signal (i. e., intensity of a detected signal) has been utilized for detecting spherical aberration as well as a shifted amount to the focal offset. However, utilization of the optical disc is not confined to such detection. Besides the above, the optical disc can be amended in its tilt to correct coma-aberration or an amplification factor for an output of photo-electric conversion can be changed to keep a signal level constant.

Still further, in the first to third embodiments, the amplitude (intensity) of a signal extracted to have a predetermined spatial frequency has been detected. However, various other modifications according to modes of a signal detected from an optical disc to be used are available, not limited to the amplitude detection. Such modifications include, in the time-axial direction, detection of the intensity of a push-pull signal and an integral of intensity of a signal extracted with a frequency filter, in addition to, in the radial direction, various signals such as a tracking error signal, and an amplitude and a filter output as in the time-axis direction. Moreover, the foregoing optical disc has been configured such that the signal detected to have the predetermined spatial frequency is included in an RF signal recorded in the circumferential direction of the disc. As an alternative, such signal having the predetermined spatial frequency may be recorded by changing a track pitch in the radial direction of an optical disc. In the optical disk shown in FIG. 13, the recordable spatial frequency in its radial direction is only $\nu 1$. In addition, any recorded form, such as a pit or a continuously formed groove, is acceptable to each track, as long as the spatial frequency in the radial direction is set correctly. Such recorded form is able to yield the same advantages as above. Namely, if the spatial frequencies $\nu 1$ and $\nu 2$ meet the foregoing conditions (1) and (2) in the radial direction as well as the track direction, the system controller 17 is able to read such various signals.

As described, the information reproducing apparatus according to the foregoing embodiments uses the intensity of a signal detected to have a predetermined spatial frequency from an optical recording medium, so that a signal indicative of spherical aberration contained in a probe light is detected. Thus, without using a particular optical system and without moving spherical aberration correcting device such as an expander lens, a focus can be controlled to have an optimum amount of offset and spherical aberration can be detected and corrected rapidly.

An optical recording medium according to the foregoing embodiments enables a correct detection of the intensity of a particular signal from the medium, even when a light spot onto the medium is subjected to astigmatism. Accordingly, the foregoing information reproducing apparatus has the capability of detecting, with precision, both spherical aberration and shifted amounts to desired focus offset.

## Claims

1. An information reproducing apparatus(100) comprising:

   a focusing device (11a) which makes a signal-reading probe light converge onto an optical recording medium(10);
   a focus servo device(12) which maintains a focus on a recording layer of the optical recordingmedium (10) by controlling the focusing device(11a);
   a focus offset providing device(14) which provides a predetermined offset to a target value used by the focus servo device(12); and
   a spherical aberration detecting device (17) which detects a signal indicative of spherical aberration contained in the probe light on the basis of an intensity of a signal reproduced based on a plurality of target values obtained by the offset providing device (14) generated on at least one signal of at least one predetermined spatial frequency recorded on the optical recording medium(10).

2. The information reproducing apparatus (100) according to claim 1, wherein the spherical aberration detecting device (17) is configured to detect the signal indicative of the spherical aberration contained in the probe light by detecting intensities of signals reproduced based on at least two target values obtained by the offset providing device(14) generated on the signal of the predetermined spatial frequency recorded on the optical recording medium(10) and by comparing the intensities of the reproduced signals toward the target values.

3. The information reproducing apparatus (100) according to claim 1, wherein the spherical aberration detecting device (17) is configured to detect the signal indicative of the spherical aberration contained in the probe light by detecting intensities of signals reproduced based on the plurality of target values obtained by the offset providing device(14) generated on the signal of the predetermined spatial frequency recorded on the optical recording medium (10) and by detecting from the plurality of target values a particular target value showing a maximum intensity among the intensities of the signals reproduced based on the plurality of target values.

4. The information reproducing apparatus (100) according to any one of claims 1 to 3, wherein when the predetermined spatial frequency is ν, a wavelength of the probe light handled by the focusing device (11a) is λ, and a numerical aperture for the probe light handled by the focusing device (11a) is NA, a relationship of $1.25NA/\lambda<\nu$ is realized.

5. An information reproducing apparatus(100) comprising:

a focusing device (11a) which makes a signal-reading probe light converge onto an optical recording medium(10);
a focus servo device(12) which maintains a focus on a recording layer of the optical recording medium (10) by controlling the focusing device (11a);
an offset providing device(14) which provides a predetermined offset to a target value used by the focus servo device(12); and
a focus offset detecting device (17) which detects a signal indicative of a shifted amount of an offset of the focus contained in the probe light on the basis of an intensity of a signal reproduced based on a plurality of target values obtained by the offset providing device (14) generated on at least one signal of at least one predetermined spatial frequency recorded on the optical recording medium(10).

6. The information reproducing apparatus (100) according to claim 5, wherein the focus offset detecting device(17) is configured to detect the shifted amount of the offset of the focus contained in the probe light by detecting intensities of signals reproduced based on at least two target values obtained by the offset providing device(14) generated on the signal of the predetermined spatial frequency recorded on the optical recording medium(10) and by comparing the intensities of the reproduced signals toward the target values.

7. The information reproducing apparatus (100) according to claim 5, wherein the focus offset detecting device(17) is configured to detect the shifted amount of the offset of the focus contained in the probe light by detecting intensities of signals reproduced based on the plurality of target values obtained by the offset providing device(14) generated on the signal of the predetermined spatial frequency recorded on the optical recording medium (10) and by detecting from the plurality of target values a particular target value showing a maximum intensity among the intensities of the signals reproduced based on the plurality of target values.

8. The information reproducing apparatus (100) according to any one of claims 5 to 7, wherein when the predetermined spatial frequency is ν, a wavelength of the probe light handled by the focusing device (11a) is λ, and a numerical aperture for the probe light handled by the focusing device (11a) is NA, a relationship of $1.25NA/\lambda>\nu$ is realized.

9. An information reproducing apparatus(200) comprising:

a focusing device (11a) which makes a signal-reading probe light converge onto an optical recording medium(10);
a focus servo device(12) which maintains a focus on a recording layer of the optical recording medium (10) by controlling the focusing device (11a);
an offset providing device(14) which provides a predetermined offset to a target value used by the focus servo device(12);
a spherical aberration detecting device (17) which detects a signal indicative of spherical aberration contained in the probe light on the basis of an intensity of a signal reproduced based on a plurality of target values obtained by the offset providing device(14) generated on a signal of a first spatial frequency recorded on the optical recording medium(10); and

a focus offset detecting device (17) which detects a signal indicative of a shifted amount of an offset of the focus contained in the probe light on the basis of an intensity of a signal reproduced based on a plurality of target values obtained by the offset providing device (14) generated on a signal of a second spatial frequency recorded on the optical recording medium(10).

10. The information reproducing apparatus (200) according to claim 9, wherein the spherical aberration detecting device (17) is configured to detect the signal indicative of the spherical aberration contained in the probe light by detecting intensities of signals reproduced based on at least two target values obtained by the offset providing device(14) generated on the signal of the first spatial frequency recorded on the optical recording medium(10) and by comparing the intensities of the reproduced signals toward the target values; and

the focus offset detecting device(17) is configured to detect the shifted amount of the offset of the focus contained in the probe light by detecting intensities of signals reproduced based on at least two target values obtained by the offset providing device generated on the signal of the second spatial frequency recorded on the optical recording medium(10) and by comparing the intensities of the reproduced signals toward the target values.

11. The information reproducing apparatus (200) according to claim 9, wherein the spherical aberration detecting device(17) is configured to detect the signal indicative of the spherical aberration contained in the probe light by detecting intensities of signals reproduced based on the plurality of target values obtained by the offset providing device(14) generated on the signal of the first spatial frequency recorded on the optical recording medium (10) and by detecting from the plurality of target values a particular target value showing a maximum intensity among the intensities of the signals reproduced based on the plurality of target values; and

the focus offset detecting device(17) is configured to detect the shifted amount of the offset of the focus contained in the probe light by detecting intensities of signals reproduced based on the plurality of target values obtained by the offset providing device (14) generated on the signal of the second spatial frequency recorded on the optical recording medium(10) and by detecting from the plurality of target values a particular target value showing a maximum intensity among the intensities of the signals reproduced based on the plurality of target values.

12. The information reproducing apparatus (200) according to any one of claims 9 to 11, wherein when a wavelength of the probe light handled by the focusing device (11a) is $\lambda$ and a numerical aperture for the probe light handled by the focusing device (11a) is NA,

the first spatial frequency $\nu 1$ is determined to satisfy a relationship of $1.25NA/\lambda < \nu 1$ and

the second spatial frequency $\nu 2$ is determined to satisfy a relationship of $1.25NA/\lambda > \nu 2$.

13. An optical recording medium (10) having a region in which a signal to be detected is continuously recorded at a first spatial frequency and a further region in which a further signal to be detected is continuously recorded at a second spatial frequency,

wherein when a wavelength of optical reading device is $\lambda$ and a numerical aperture of the optical reading device is NA, the first spatial frequency $\nu 1$ is determined to satisfy a relationship of $1.25NA/\lambda < \nu 1$ and the second spatial frequency $\nu 2$ is determined to satisfy a relationship of $1.25NA/\lambda > \nu 2$.

14. An optical recording medium(10) having a plurality of information tracks along which a signal to be detected is optically recorded as a pit or mark having a predetermined length providing information,

wherein in at least part of a particular information track of the plurality of information tracks, arrays of pits or marks providing the same frequency are recorded on the particular information track and an information track adjacent to the particular information track,

the pits or marks on the particular information track being mutually shifted in position by an amount of half of a period from the pits or marks on the adjacent information track.

15. The optical recording medium(10) according to claim 13, wherein the regions are formed as a plurality of information tracks along which the signal to be detected is optically recorded as a pit or mark having a predetermined length providing information,

wherein in at least part of a particular information track of the plurality of information tracks, arrays of pits or marks providing the same frequency are recorded on the particular information track and an information track adjacent to the particular information track,

the pits or marks on the particular information track being mutually shifted in position by an amount of half of a period from the pits or marks on the adjacent information track.

16. The optical recording medium(10) according to claim 14 or 15, wherein a length of a plane spacing formed between mutually adjacent two pits or marks residing on the particular track is approximately double of a length of a plane spacing formed between the center of particular track and a pit or mark residing on an adjacent information track to the particular information track in a direction particular to the particular information track.

17. The optical recording medium(10) according to any one of claims 13 to 16, wherein the signal to be detected is recorded as a Phase Encoded Part (PEP) signal.

**Patentansprüche**

1. Informationswiedergabegerät (100) enthaltend:

   eine Fokussiervorrichtung (11a), die ein Signallesesondenlicht auf ein optisches Aufzeichnungsmedium (10) konvergieren lässt;

   eine Fokusservovorrichtung (12), die einen Fokus auf einer Aufzeichnungsschicht des optischen Aufzeichnungsmediums (10) hält, indem die Fokussiervorrichtung (11a) geregelt wird;

   eine Fokusversatzerzeugungsvorrichtung (14), die einen vorgegebenen Versatz gegenüber einem Zielwert erzeugt, der von der Fokusservovorrichtung (12) verwendet wird; und

   eine Sphärikabberationserfassungsvorrichtung (17), die ein Signal erfasst, das für die sphärische Abberation kennzeichnend ist, die in dem Sondenlicht enthalten ist, auf der Grundlage einer Intensität eines Signals, das auf der Grundlage mehrerer Zielwerte reproduziert wird, die durch die Versatzerzeugungsvorrichtung (14) erhalten werden, erzeugt an wenigstens einem Signal wenigstens einer vorbestimmten räumlichen Frequenz, das auf dem optischen Aufzeichnungsmedium (10) aufgezeichnet ist.

2. Informationswiedergabegerät (100) nach Anspruch 1, bei dem die Sphärikabberationserfassungsvorrichtung (17) dazu gestaltet ist, das Signal zu erfassen, das für die sphärische Abberation kennzeichnend ist, die in dem Sondenlicht enthalten ist, durch Erfassung der Intensitäten von Signalen, die auf der Grundlage wenigstens zweier Zielwerte reproduziert werden, die durch die Versatzerzeugungsvorrichtung (14) erhalten werden, erzeugt an dem Signal der vorbestimmten räumlichen Frequenz, das auf dem optischen Aufzeichnungsmedium aufgezeichnet ist, und durch Vergleich der Intensitäten der wiedergegebenen Signale mit den Zielwerten.

3. Informationswiedergabegerät (100) nach Anspruch 1, bei dem die Sphärikabberationserfassungsvorrichtung (17) dazu gestaltet ist, das Signal zu erfassen, das für die sphärische Abberation kennzeichnend ist, die in dem Sondenlicht enthalten ist, durch Erfassung von Intensitäten von Signalen, die auf der Grundlage der mehreren Zielwerte wiedergegeben werden, die durch die Versatzerzeugungsvorrichtung (14) erhalten werden, erzeugt an dem Signal der vorbestimmten räumlichen Frequenz, das auf dem optischen Aufzeichnungsmedium (10) aufgezeichnet ist, und durch Erfassen eines speziellen Zielwertes aus der Vielzahl Zielwerte, der eine Maximalintensität unter den Intensitäten der Signale zeigt, die auf der Grundlage der mehreren Zielwerte wiedergegeben werden.

4. Informationswiedergabegerät (100) nach einem der Ansprüche 1 bis 3, bei dem, wenn die vorbestimmte räumliche Frequenz v ist, eine Wellenlänge des Sondenlichts, das von der Fokussiervorrichtung (11a) behandelt wird, $\lambda$ ist, und eine numerische Apertur für das Sondenlicht, das von der Fokussiervorrichtung (11a) behandelt wird, NA ist, ein Verhältnis von $1{,}25NA/\lambda < v$ realisiert wird.

5. Informationswiedergabegerät (100) enthaltend:

   eine Fokussiervorrichtung (11a), die eine Signallesesonde veranlasst, Licht auf einem optischen Aufzeichnungsmedium (10) zu konvergieren;

   eine Fokusservovorrichtung (12), die einen Fokus auf einer Aufzeichnungsschicht des optischen Aufzeichnungsmediums (10) aufrechterhält, indem die Fokussiervorrichtung (11a) geregelt wird;

   eine Versatzerzeugungsvorrichtung (14), die einen vorbestimmten Versatz gegenüber dem Zielwert erzeugt, der von der Fokusservovorrichtung (12) verwendet wird; und

   eine Fokusversatzerfassungsvorrichtung (17), die ein Signal erfasst, das für eine verschobene Größe eines Versatzes des Fokus kennzeichnend ist, der in dem Sondenlicht enthalten ist, auf der Grundlage einer Intensität eines Signals, das auf der Grundlage mehrerer Zielwerte wiedergegeben wird, die von der Versatzerzeugungsvorrichtung (14) erhalten werden, erzeugt an wenigstens einem Signal wenigstens einer vorbestimmten räumlichen Frequenz, das auf dem optischen Aufzeichnungsmedium (10) aufgezeichnet ist.

6. Informationswiedergabegerät (100) nach Anspruch 5, bei dem die Fokusversatzerfassungsvorrichtung (17) dazu gestaltet ist, die verschobene Größe des Versatzes des Fokus, der in dem Sondenlicht enthalten ist, durch Erfassung von Intensitäten von Signalen zu erfassen, die auf der Grundlage wenigstens zweier Zielwerte wiedergegeben werden, die durch die Versatzerzeugungsvorrichtung (14) erhalten werden, erzeugt an dem Signal der vorliegenden räumlichen Frequenz, das auf dem optischen Aufzeichnungsmedium (10) aufgezeichnet ist, und durch Vergleich der Intensitäten der wiedergegebenen Signale gegenüber den Zielwerten.

7. Informationswiedergabegerät (100) nach Anspruch 5, bei dem die Fokusversatzerfassungsvorrichtung (17) dazu gestaltet ist, die verschobene Größe des Versatzes des Fokus, der in dem Sondenlicht enthalten ist, zu erfassen, indem Intensitäten von Signalen erfasst werden, die auf der Grundlage der mehreren Zielwerte wiedergegeben werden, die an dem Signal vorbestimmter räumlicher Frequenz erzeugt werden, das auf dem optischen Aufzeichnungsmedium (10) aufgezeichnet ist, und durch Erfassen eines speziellen Zielwertes aus der Vielzahl Zielwerte, der eine maximale Intensität unter den Intensitäten der Signale zeigt, die auf der Grundlage der mehreren Zielwerte wiedergegeben werden.

8. Informationswiedergabegerät (100) nach einem der Ansprüche 5 bis 7, bei dem, wenn die vorbestimmte räumliche Frequenz v ist, eine Wellenlänge des Sondenlichts, das von der Fokussiervorrichtung (11) behandelt wird λ ist, und eine numerische Apertur des Sondenlichts, das von der Fokussiervorrichtung (11a) behandelt wird, NA ist, ein Verhältnis von 1,25NA/λ>v realisiert wird.

9. Informationswiedergabegerät (200) enthaltend:

    eine Fokussiervorrichtung (11a), die ein Signallesesondenlicht auf einem optischen Aufzeichnungsmedium (10) konvergieren lässt;

    eine Fokusservovorrichtung (12), die einen Fokus auf einer Aufzeichnungsschicht des optischen Aufzeichnungsmediums (10) durch Regelung der Fokussiervorrichtung (11a) aufrechterhält;

    eine Versatzerzeugungsvorrichtung (14), die einen vorbestimmten Versatz gegenüber einem Zielwert, der von der Fokusservovorrichtung (12) verwendet wird, erzeugt;

    eine Sphärikabberationserfassungsvorrichtung (17), die ein Signal erfasst, das für die sphärische Abberation kennzeichnend ist, das in dem Sondenlicht enthalten ist, auf der Grundlage einer Intensität eines wiedergegebenen Signals auf der Grundlage einer Vielzahl Zielwerte, die man durch die Versatzerzeugungsvorrichtung (14) erhält, erzeugt an einem Signal einer ersten räumlichen Frequenz, das auf dem optischen Aufzeichnungsmedium (10) aufgezeichnet ist; und

    eine Fokusversatzerfassungsvorrichtung (17), die ein Signal erfasst, dass für eine verschobene Größe eines Versatzes des Fokus kennzeichnend ist, der in dem Sondenlicht enthalten ist, auf der Grundlage einer Intensität eines wiedergegebenen Signals auf der Grundlage mehrerer Zielwerte, die durch die Versatzerzeugungsvorrichtung (14) erhalten werden, erzeugt an einem Signal einer zweiten räumlichen Frequenz, das auf dem optischen Aufzeichnungsmedium (10) aufgezeichnet ist.

10. Informationswiedergabegerät (200) nach Anspruch 9, bei dem die Sphärikabberationserfassungsvorrichtung (17) dazu gestaltet ist, das Signal zu erfassen, das für die sphärische Abberation kennzeichnend ist, die in dem Sondenlicht enthalten ist, durch die Erfassung der Intensitäten von wiedergegebenen Signalen auf der Grundlage wenigstens zweier Zielwerte, die durch die Versatzerzeugungsvorrichtung (14) erhalten werden, erzeugt an dem Signal der ersten räumlichen Frequenz, das auf dem optischen Aufzeichnungsmedium (10) aufgezeichnet ist, und durch Vergleichen der Intensitäten der wiedergegebenen Signale mit den Zielwerten; und die Fokusversatzerfassungsvorrichtung (17) dazu gestaltet ist, die verschobene Größe des Versatzes des Fokus zu erfassen, der in dem Sondenlicht enthalten ist, durch Erfassung der Intensitäten wiedergegebener Signale auf der Grundlage wenigstens zweier Zielwerte, die man durch Versatzerzeugungsvorrichtung erhält, erzeugt an dem Signal der zweiten räumlichen Frequenz, das auf dem optischen Aufzeichnungsmedium (10) aufgezeichnet und durch Vergleichen der Intensitäten der wiedergegebenen Signale mit den Zielwerten.

11. Informationswiedergabegerät (200) nach Anspruch 9, bei dem die Sphärikabberationserfassungsvorrichtung (17) dazu gestaltet ist, das Signal zu erfassen, das für die sphärische Abberation kennzeichnend ist, die in dem Sondenlicht enthalten ist, durch die Erfassung der Intensitäten von wiedergegebenen Signalen auf der Grundlage der Vielzahl Zielwerte, die durch die Versatzerzeugungsvorrichtung (14) erhalten werden, erzeugt an dem Signal der ersten räumlichen Frequenz, das auf dem optischen Aufzeichnungsmedium (10) aufgezeichnet ist, und durch Erfassen eines speziellen Zielwertes aus der Vielzahl Zielwerte, der eine maximale Intensität unter den Intensitäten der wiedergegebenen Signale zeigt, auf der Grundlage der Vielzahl Zielwerte; und

die Fokusversatzerfassungsvorrichtung (17) so gestaltet ist, die verschobene Größe des Versatzes des Fokus zu erfassen, der in dem Sondenlicht enthalten ist, durch Erfassung der Intensitäten von wiedergegebenen Signalen auf der Grundlage der Vielzahl Zielwerte, die durch die Versatzerzeugungsvorrichtung (14) erhalten werden, erzeugt an dem Signal der zweiten räumlichen Frequenz, das auf dem optischen Aufzeichnungsmedium (10 aufgezeichnet ist, und durch Erfassen eines speziellen Zielwertes aus der Vielzahl Zielwerte, der eine maximale Intensität unter den Intensitäten der wiedergegebenen Signale zeigt, auf der Grundlage der Vielzahl Zielwerte.

12. Informationswiedergabegerät (200) nach einem der Ansprüche 9 bis 11, bei dem, wenn eine Wellenlänge des Sondenlichts, das von der Fokussiervorrichtung (11a) behandelt wird, λ ist und eine numerische Apertur für das Sondenlicht, das von der Fokussiervorrichtung (11a) behandelt wird, NA ist, die erste räumliche Frequenz v1 bestimmt ist, das Verhältnis $1{,}25NA/\lambda < v1$ zu befriedigen, und die zweite räumliche Frequenz v2 bestimmt ist, ein Verhältnis $1{,}25NA/\lambda > v2$ zu befriedigen.

13. Optisches Aufzeichnungsmedium (10) mit einem Bereich, in dem ein zu erfassendes Signal zusammenhängend mit einer ersten räumlichen Frequenz aufgezeichnet ist, und einen weiteren Bereich, indem ein weiteres zu erfassendes Signal zusammenhängend mit einer zweiten räumlichen Frequenz aufgezeichnet ist, wobei wenn eine Wellenlänge einer optischen Lesevorrichtung λ ist und eine numerische Apertur der optischen Lesevorrichtung NA ist, die erste räumliche Frequenz v1 so bestimmt ist, dass ein Verhältnis $1{,}25NA/\lambda < v1$ befriedigt wird und die zweite räumliche Frequenz v2 so bestimmt ist, dass ein Verhältnis $1{,}25NA/\lambda > v2$ befriedigt wird.

14. Optisches Aufzeichnungsmedium (10) mit mehreren Informationsspuren, längs denen ein zu erfassendes Signal optisch als eine Information liefernde Vertiefung oder Markierung einer vorbestimmten Länge aufgezeichnet ist; wobei in wenigstens einem Teil einer speziellen Informationsspur der Vielzahl Informationsspuren Gruppen von Vertiefungen oder Markierungen, die die gleiche Frequenz liefern, auf der speziellen Informationsspur und einer zu der speziellen Informationsspur benachbarten Informationsspur aufgezeichnet sind, wobei die Vertiefungen oder Markierungen auf der speziellen Informationsspur gegeneinander in der Position um die Größe einer Hälfte einer Periode gegen die Vertiefungen oder Markierungen der benachbarten Informationsspur versetzt sind.

15. Optisches Aufzeichnungsmedium (10) nach Anspruch 13, bei dem die Bereiche in mehreren Informationsspuren ausgebildet sind, längs denen das zu erfassende Signal optisch als eine Information liefernde Vertiefung oder Markierung einer vorbestimmten Länge aufgezeichnet ist, wobei in wenigstens einem Teil einer speziellen Informationsspur der Vielzahl Informationsspuren Gruppen von Vertiefungen oder Markierungen, die die gleiche Frequenz liefern, auf der speziellen Informationsspur und einer der speziellen Informationsspur benachbarten Informationsspur aufgezeichnet sind, wobei die Vertiefungen oder Markierungen auf der speziellen Informationsspur in der Position um eine Größe der Hälfte einer Periode gegen die Vertiefungen oder Markierungen auf der benachbarten Aufzeichnungsspur verschoben sind.

16. Optisches Aufzeichnungsmedium (10) nach Anspruch 14 oder 15, bei dem eine Länge eines ebenen Abstandes, der zwischen einander benachbarten zwei Vertiefungen oder Markierungen, die auf der speziellen Spur liegen, etwa das Doppelte einer Länge eines ebenen Abstandes ist, der zwischen der Mitte der speziellen Spur und einer Vertiefung oder Markierung ausgebildet ist, die auf einer der speziellen Informationsspur benachbarten Informationsspur in einer für die spezielle Informationsspur speziellen Richtung liegt.

17. Optisches Aufzeichnungsmedium (10) nach einem der Ansprüche 13 bis 16, bei dem das zu erfassende Signal als ein Phase-Encoded-Part-(PEP-)Signal aufgezeichnet ist.

## Revendications

1. Appareil de reproduction d'information (100) comprenant :

   un dispositif de focalisation (11a) qui réalise une convergence de lumière de sonde de lecture de signal sur un support d'enregistrement optique (10) ;
   un dispositif d'asservissement de focalisation (12) qui maintient une focalisation sur une couche d'enregistrement du support d'enregistrement optique (10) en commandant le dispositif de focalisation (11a) ;
   un dispositif de constitution de décalage de focalisation (14) qui constitue un décalage prédéterminé par rapport à une valeur cible qui est utilisée par le dispositif d'asservissement de focalisation (12) ; et

un dispositif de détection d'aberration sphérique (17) qui détecte un signal qui est indicatif d'une aberration sphérique qui est contenue dans la lumière de sonde sur la base d'une intensité d'un signal qui est reproduit sur la base d'une pluralité de valeurs cibles qui sont obtenues au moyen du dispositif de constitution de décalage (14) comme généré sur au moins un signal d'au moins une fréquence spatiale prédéterminée qui est enregistré sur le support d'enregistrement optique (10).

2. Appareil de reproduction d'information (100) selon la revendication 1, dans lequel le dispositif de détection d'aberration sphérique (17) est configuré pour détecter le signal qui est indicatif de l'aberration sphérique comme contenu dans la lumière de sonde en détectant des intensités de signaux qui sont reproduits sur la base d'au moins deux valeurs cibles qui sont obtenues au moyen du dispositif de constitution de décalage (14) comme généré sur le signal de la fréquence spatiale prédéterminée qui est enregistré sur le support d'enregistrement optique (10) et en comparant les intensités des signaux reproduits en direction des valeurs cibles.

3. Appareil de reproduction d'information (100) selon la revendication 1, dans lequel le dispositif de détection d'aberration sphérique (17) est configuré pour détecter le signal qui est indicatif de l'aberration sphérique qui est contenue dans la lumière de sonde en détectant des intensités de signaux qui sont reproduits sur la base de la pluralité de valeurs cibles qui sont obtenues au moyen du dispositif de constitution de décalage (14) comme généré sur le signal de la fréquence spatiale prédéterminée qui est enregistré sur le support d'enregistrement optique (10) et en détectant à partir de la pluralité de valeurs cibles une valeur cible particulière qui présente une intensité maximum parmi les intensités des signaux reproduits sur la base de la pluralité de valeurs cibles.

4. Appareil de reproduction d'information (100) selon l'une quelconque des revendications 1 à 3, dans lequel, lorsque la fréquence spatiale prédéterminée vaut ν, qu'une longueur d'onde de la lumière de sonde qui est manipulée par le dispositif de focalisation (11a) vaut λ et qu'une ouverture numérique pour la lumière de sonde qui est manipulée par le dispositif de focalisation (11a) vaut NA, une relation qui est donnée par 1,25 NA/λ < ν est réalisée.

5. Appareil de reproduction d'information (100) comprenant :

un dispositif de focalisation (11a) qui fait converger une lumière de sonde de lecture de signal sur un support d'enregistrement optique (10) ;

un dispositif d'asservissement de focalisation (12) qui maintient une focalisation sur une couche d'enregistrement du support d'enregistrement optique (10) en commandant le dispositif de focalisation (11a) ;

un dispositif de constitution de décalage (14) qui constitue un décalage prédéterminé par rapport à une valeur cible qui est utilisée par le dispositif d'asservissement de focalisation (12) ; et

un dispositif de détection de décalage de focalisation (17) qui détecte un signal qui est indicatif d'une valeur décalée d'un décalage de la focalisation comme contenu dans la lumière de sonde sur la base d'une intensité d'un signal qui est reproduit sur la base d'une pluralité de valeurs cibles comme obtenu par le dispositif de constitution de décalage de focalisation (14) comme généré sur au moins un signal d'au moins une fréquence spatiale prédéterminée qui est enregistré sur le support d'enregistrement optique (10).

6. Appareil de reproduction d'information (100) selon la revendication 5, dans lequel le dispositif de détection de décalage de focalisation (17) est configuré pour détecter la valeur décalée du décalage de la focalisation comme contenu dans la lumière de sonde en détectant des intensités de signaux qui sont reproduits sur la base d'au moins deux valeurs cibles qui sont obtenues au moyen du dispositif de constitution de décalage (14) comme généré sur le signal de la fréquence spatiale prédéterminée qui est enregistré sur le support d'enregistrement optique (10) et en comparant les intensités des signaux reproduits en direction des valeurs cibles.

7. Appareil de reproduction d'information (100) selon la revendication 5, dans lequel le dispositif de détection de décalage de focalisation (17) est configuré pour détecter la valeur décalée du décalage de la focalisation comme contenu dans la lumière de sonde en détectant des intensités de signaux qui sont reproduits sur la base de la pluralité de valeurs cibles qui sont obtenues au moyen du dispositif de constitution de décalage (14) comme généré sur le signal de la fréquence spatiale prédéterminée qui est enregistré sur le support d'enregistrement optique (10) et en détectant à partir de la pluralité de valeurs cibles une valeur cible particulière qui présente une intensité maximum parmi les intensités des signaux qui sont reproduits sur la base de la pluralité de valeurs cibles.

8. Appareil de reproduction d'information (100) selon l'une quelconque des revendications 5 à 7, dans lequel, lorsque la fréquence spatiale prédéterminée vaut ν, qu'une longueur d'onde de la lumière de sonde qui est manipulée par le dispositif de focalisation (11a) vaut λ et qu'une ouverture numérique pour la lumière de sonde qui est manipulée par le dispositif de focalisation (11a) vaut NA, une relation qui est donnée par 1,25 NA/λ > ν est réalisée.

9. Appareil de reproduction d'information (200) comprenant :

un dispositif de focalisation (11a) qui fait converger une lumière de sonde de lecture de signal sur un support d'enregistrement optique (10) ;
un dispositif d'asservissement de focalisation (12) qui maintient une focalisation sur une couche d'enregistrement du support d'enregistrement optique (10) en commandant le dispositif de focalisation (11a) ;
un dispositif de constitution de décalage (14) qui constitue un décalage prédéterminé par rapport à une valeur cible qui est utilisée par le dispositif d'asservissement de focalisation (12) ;
un dispositif de détection d'aberration sphérique (17) qui détecte un signal qui est indicatif d'une aberration sphérique qui est contenue dans la lumière de sonde sur la base d'une intensité d'un signal qui est reproduit sur la base d'une pluralité de valeurs cibles qui sont obtenues au moyen du dispositif de constitution de décalage (14) comme généré sur un signal d'une première fréquence spatiale qui est enregistré sur le support d'enregistrement optique (10) ; et
un dispositif de détection de décalage de focalisation (17) qui détecte un signal qui est indicatif d'une valeur décalée d'un décalage de la focalisation comme contenu dans la lumière de sonde sur la base d'une intensité d'un signal qui est reproduit sur la base d'une pluralité de valeurs cibles comme obtenu par le dispositif de constitution de décalage (14) comme généré sur un signal d'une seconde fréquence spatiale qui est enregistré sur le support d'enregistrement optique (10).

10. Appareil de reproduction d'information (200) selon la revendication 9, dans lequel :

le dispositif de détection d'aberration sphérique (17) est configuré pour détecter le signal qui est indicatif de l'aberration sphérique qui est contenue dans la lumière de sonde en détectant des intensités de signaux qui sont reproduits sur la base d'au moins deux valeurs cibles qui sont obtenues au moyen du dispositif de constitution de décalage (14) comme généré sur le signal de la première fréquence spatiale qui est enregistré sur le support d'enregistrement optique (10) et en comparant les intensités des signaux reproduits en direction des valeurs cibles ; et
le dispositif de détection de décalage de focalisation (17) est configuré pour détecter la valeur décalée du décalage de la focalisation comme contenu dans la lumière de sonde en détectant des intensités de signaux qui sont reproduits sur la base d'au moins deux valeurs cibles qui sont obtenues au moyen du dispositif de constitution de décalage comme généré sur le signal de la seconde fréquence spatiale qui est enregistré sur le support d'enregistrement optique (10) et en comparant les intensités des signaux reproduits en direction des valeurs cibles.

11. Appareil de reproduction d'information (200) selon la revendication 9, dans lequel :

le dispositif de détection d'aberration sphérique (17) est configuré pour détecter le signal qui est indicatif de l'aberration sphérique qui est contenue dans la lumière de sonde en détectant des intensités de signaux qui sont reproduits sur la base de la pluralité de valeurs cibles qui sont obtenues au moyen du dispositif de constitution de décalage (14) comme généré sur le signal de la première fréquence spatiale qui est enregistré sur le support d'enregistrement optique (10) et en détectant à partir de la pluralité de valeurs cibles une valeur cible particulière qui présente une intensité maximum parmi les intensités des signaux qui sont reproduits sur la base de la pluralité de valeurs cibles ; et
le dispositif de détection de décalage de focalisation (17) est configuré pour détecter la valeur décalée du décalage de la focalisation comme contenu dans la lumière de sonde en détectant des intensités de signaux qui sont reproduits sur la base de la pluralité de valeurs cibles qui sont obtenues au moyen du dispositif de constitution de décalage (14) comme généré sur le signal de la seconde fréquence spatiale qui est enregistré sur le support d'enregistrement optique (10) et en détectant parmi la pluralité de valeurs cibles une valeur cible particulière qui présente une intensité maximum parmi les intensités des signaux qui sont reproduits sur la base de la pluralité de valeurs cibles.

12. Appareil de reproduction d'information (200) selon l'une quelconque des revendications 9 à 11, dans lequel, lorsqu'une longueur d'onde de la lumière de sonde qui est manipulée par le dispositif de focalisation (11a) vaut λ et qu'une ouverture numérique pour la lumière de sonde qui est manipulée par le dispositif de focalisation (11a) vaut NA,

la première fréquence spatiale ν1 est déterminée de manière à satisfaire la relation qui est donnée par 1,25NA/λ < ν1 ; et

la seconde fréquence spatiale ν2 est déterminée de manière à satisfaire la relation qui est donnée par 1,25NA/λ > ν2.

13. Support d'enregistrement optique (10) qui comporte une région

dans laquelle un signal destiné à être détecté est enregistré en continu à une première fréquence spatiale et une autre région dans laquelle un autre signal destiné à être détecté est enregistré en continu à une seconde fréquence spatiale,

dans lequel, lorsqu'une longueur d'onde d'un dispositif de lecture optique vaut λ et qu'une ouverture numérique du dispositif de lecture optique vaut NA, la première fréquence spatiale ν1 est déterminée de manière à satisfaire la relation qui est donnée par 1,25NA/λ < ν1 et la seconde fréquence spatiale ν2 est déterminée de manière à satisfaire la relation qui est donnée par 1,25NA/λ > ν2.

14. Support d'enregistrement optique (10) qui comporte une pluralité de pistes d'information le long desquelles un signal destiné à être détecté est enregistré optiquement en tant que piqûre ou marque présentant une longueur prédéterminée constituant une information,

dans lequel, dans au moins une partie d'une piste d'information particulière de la pluralité de pistes d'information, des réseaux de piqûres ou de marques constituant la même fréquence sont enregistrés sur la piste d'information particulière et sur une piste d'information qui est adjacente à la piste d'information particulière,

les piqûres ou les marques sur la piste d'information particulière étant décalées de façon mutuelle en termes de position d'une valeur égale à la moitié d'une période par rapport aux piqûres ou marques sur la piste d'information adjacente.

15. Support d'enregistrement optique (10) selon la revendication 13,

dans lequel les régions sont formées en tant que pluralité de pistes d'information le long desquelles le signal destiné à être détecté est enregistré optiquement en tant que piqûre ou marque présentant une longueur prédéterminée constituant une information,

dans lequel, dans au moins une partie d'une piste d'information particulière de la pluralité de pistes d'information, des réseaux de piqûres ou de marques constituant la même fréquence sont enregistrés sur la piste d'information particulière et sur une piste d'information qui est adjacente à la piste d'information particulière,

les piqûres ou les marques sur la piste d'information particulière étant décalées de façon mutuelle en termes de position d'une valeur égale à la moitié d'une période par rapport aux piqûres ou marques sur la piste d'information adjacente.

16. Support d'enregistrement optique (10) selon la revendication 14 ou 15, dans lequel une longueur d'un espacement plan formé entre deux piqûres ou marques mutuellement adjacentes résidant sur la piste d'information particulière est d'approximativement le double d'une longueur d'un espacement plan qui est formé entre le centre d'une piste particulière et une piqûre ou marque résidant sur une piste d'information adjacente par rapport à la piste d'information particulière suivant une direction particulière par rapport à la piste d'information particulière.

17. Support d'enregistrement optique (10) selon l'une quelconque des revendications 13 à 16, dans lequel le signal destiné à être détecté est enregistré en tant que signal de partie codée en phase (PEP).

FIG. 1

100

# FIG. 2

CHANGES IN SIGNAL AMPLITUDE

DEFOCUSED AMOUNT [um]

AMOUNT OF SPHERICAL ABERRATION [um]

# FIG. 3A

# FIG. 3B

# FIG. 4A

CHANGES IN SIGNAL AMPLITUDE

# FIG. 4B

CHANGES IN SIGNAL AMPLITUDE

# FIG. 5

# FIG. 6

200

EP 1 382 036 B1

## FIG. 7

CHANGES IN SIGNAL AMPLITUDE

AMOUNT OF SPHERICAL ABERRATION[um]

DEFOCUSED AMOUNT [um]

# FIG. 8

EP 1 382 036 B1

# FIG. 9

DISC CENTER

TRACK DIRECTION

PIT

FIG. 10

DISC CENTER

TRACK DIRECTION

PIT

FIG. 11

# FIG. 12

CHANGES IN RF SIGNAL AMPLITUDE
OF 6T FREQUENCY

EP 1 382 036 B1

# FIG. 13

DISC CENTER

TRACK DIRECTION

41  42  43  PIT

35
36
37
38
39

X
Y

# FIG. 14

CHANGES IN RF SIGNAL AMPLITUDE
OF 6T FREQUENCY

dB (vertical axis)

FOCUS OFFSET [um]